# EUROPÄISCHE PATENTSCHRIFT

(11) **EP 1 438 242 B1**
(45) Veröffentlichungstag und Bekanntmachung des Hinweises auf die Patenterteilung: **08.03.2006**
(21) Anmeldenummer: 02782968.8
(22) Anmeldetag: 21.10.2002
(51) Int. Cl.: B65G 1/04, B62D 65/00

(54) **VERFAHREN UND SYSTEM ZUM ZWISCHENLAGERN VON POLAREN LASTEN UND INTEGRATION DERSELBEN IN EINEN TRANSPORTPROZESS, INSBESONDERE IN DER AUTOMOBILFERTIGUNG**
METHOD AND SYSTEM FOR TEMPORARILY STORING POLAR LOADS AND FOR INTEGRATING SAME IN A TRANSPORT PROCESS, IN PARTICULAR IN AUTOMOTIVE CONSTRUCTION
PROCEDE ET SYSTEME POUR STOCKER PROVISOIREMENT DES CHARGES POLAIRES ET POUR INTEGRER CELLES-CI DANS UN PROCESSUS DE TRANSPORT, NOTAMMENT DANS LA CONSTRUCTION AUTOMOBILE

(30) Priorität: 22.10.2001 DE 10152019
(43) Veröffentlichungstag der Anmeldung: 21.07.2004
(73) Patentinhaber: KRUSCHE LAGERTECHNIK AG, 85435 Erding (DE)
(72) Erfinder: KRUSCHE, Arnold, 35584 Wetzlar (DE)
(74) Vertreter: Jehle, Volker Armin
(86) Internationale Anmeldenummer: PCT/EP2002/011758
(87) Internationale Veröffentlichungsnummer: WO 2003/035516

(56) Entgegenhaltungen:
- EP-A- 0 589 844
- DE-A- 19 940 005
- FR-A- 2 381 695
- US-A- 4 265 582
- US-A- 5 449 261

## Beschreibung

Gegenstand der vorliegenden Erfindung ist ein Verfahren und ein System zum Zwischenlagern von polaren Lasten wie beispielsweise Automobilkarosserien, wobei nach dem Auslagern der polaren Lasten ein Integrieren in ein Transportprozeß erfolgt.

Bei der Fertigung von polaren Gütern wie beispielsweise Automobilen erfolgt die Fertigung und der Transport auf unterschiedlichen Transportvorrichtungen wie beispielsweise Fließbändern, Förderstraßen etc.

Nachfolgend beschreiben polare Güter oder Lasten Gegenstande, deren Außenkontur im wesentlichen keine Symmetrie aufweisen, wie beispielsweise Automobilkarosserien. Die bestimmte Orientierung der polaren Last während der Transports oder der Fertigung ist ein wesentliches Erfordernis, da im Rahmen der regelmäßig anzutreffeaden Automatisierung, insbesondere in der Automobilfertigung, Prozeßschritte, wie beispielsweise Lackierung, Schweißen von Kotflügeln, Einsetzen von Glasscheben, etc. vollautomatisch vorgenommen werden und eine bestimmte Orientierung der polaren Last während dieser Prozeßschritte notwendig ist.

Um einen möglichst stetigen und stabilen Fertigungsprozeß zu erhalten, ist es üblich, den gesamten Fertigungsprozeß in einzelne Fertigungsblöcke zu unterteilen, wobei die Unterteilung entsprechend vorgegebener Baugruppen und/oder anderer sachlicher Unteischeidungsmerkmale erfolgt. Zur Aufrechterhaltung der Kontinuität des Fetrigungsprozesses ist es daher notwendig, in regelmäßigen Abstäaden sogenannte Zwischenlager (Sequenzbuffer) vorzusehen, die es erlauben, den Fertigungsprozeß auch dann fortzusetzen, wenn an einem vor diesem Zwischenlager befindlichen Fetrigungsblock, beispielsweise aufgrund eines Fehlers oder notwendiger Nachrüstarbeiten, die Fertigung stoppt. Herkömmlicherweise wird das Zwischenlager benachbart zu einer entsprechenden Transporteinrichtung angeordnet, um so ein rasches Einlagern als auch zeitnahes Auslagern und Integrieren in den Transport- und ggf. Fertigungsprozeß zu ermöglichen.

Das US Patent Nr. 5,449,261 lehrt ein Parksystem, bei dem parkende Fahrzeuge auf einer fahrstuhlähnlichen Vorrichtung in einem vertikalen Schaft bewegt werden, um anschließend nach einer horizontalen Versatzbewegung in einer Parkbucht abzustellen, mit dem Ziel die Ausnutzung des zur Verfügung stehenden Raumes zu optimieren.

In der Druckschrift FR 2 381 695 ist eine Transportvorrichtung für Karosserien zum Einsatz in einem Transportprozess, bspw. innerhalb einer Fabrik, beschrieben, wobei die Karosserien stets in einer entsprechenden Haltevorrichtung hängend transportiert werden. Der Transport der Karosserien wird hierbei so ausgestaltet, daß manuelle Fertigungsmaßnahmen an den sich bewegenden Karosserien ausgeführt werden können.

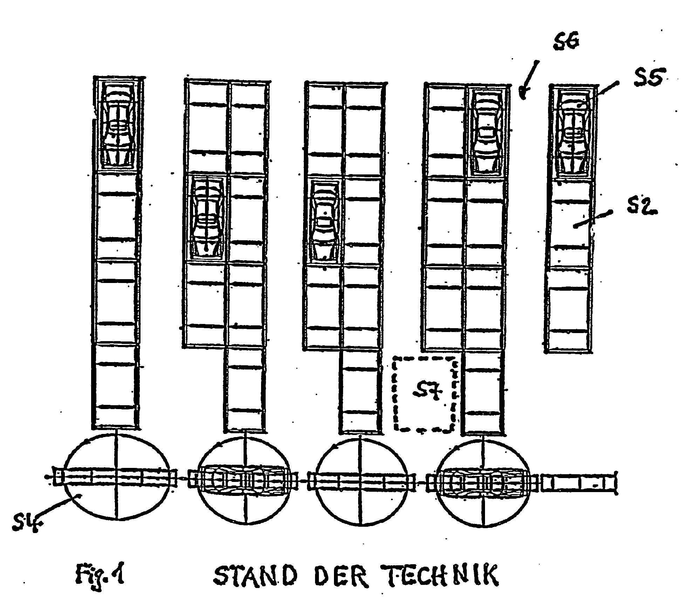

In bekannten Zwischenlagern, wie in Figur 1 gezeigt, können polare Lasten, wie beispielsweise Automobilkarosserien lediglich quer eingelagert werden, da die zur Verfügung stehenden Transporteinrichtungen polare Lasten von erheblichem Gewicht, d.h. beispielsweise schwerer als 400 kg, nicht in einer beliebigen Orientierung transportieren und einlagem können.

Aufgrund der von den Transportsystemen vorgegebenen Einlagerungs- und Transportorientierung erfordert ein gemäß Figur 1 dargestellter Zwischenspeicher neben einer gewissen Anzahl von Regalbediengeräten als Transportvorrichtung in jeder Regalgasse zumindest einen Bereich, in der eine Orientierungsänderung der polaren Last vorgenommen werden kann. Eine solche Orientierungsänderung kann beispielsweise mittels Rotationstisch realisiert werden, der als Verbindungselement zwischen der Auslagerungsstation des Regalbereichs und der Integrationsstelle des Transportprozeß angeordnet ist. Bei einer Vielzahl von Regalgassen kann es daher notwendig sein, eine gleiche Anzahl von Rotationsvorrichtungen bereitzustellen, um eine reibungslose Integration der polaren Last in den Transportprozeß zu bewerkstelligen.

Um eine Orientierungsänderung der zu transportierenden polaren Last zu erzielen, kann ferner im Transportprozeß an jeder Lastaufnahmevorrichtung eine Rotationsvorrichtung vorgesehen sein, die es erlaubt, die polare Last entsprechend den Bedürfnissen zu orientieren.

Als nachteilig hat sich hierbei erwiesen, daß die Bereitstellung einer Vielzahl von Rotationsvorrichtungen zur Orientierungsänderung der polaren Last einerseits technisch aufwendig ist und andererseits ein gewisses Ausfallpotential birgt, so daß bei Ansfall dieser Rotationsvorrichtungen die betroffenen Abschnitte der Zwischenlager nicht ordnungsgemäß bedient werden können.

Aufgabe der vorliegenden Erfindung ist es daher, ein Verfahren und ein System beteitzustellen, welches es erlaubt, die Anzahl der Regalbediengeräte wesentlich zu reduzieren und gleichermaßendie Nutzfläche des Zwischenlagers zu optimieren, wobei insbesondere die Möglichkeit zu schaffen ist, die zu transportierende polare Last in einen beliebigen Transportprozeß zu integrieren.

Diese Aufgabe wird durch das erfindungsgemäße Verfahren mit den Merkmalen gemäß Anspruch 1 sowie durch das erfindungsgemäße System mit den Merkmalen gemäß Anspruch 3 gelöst. Die Unteransprüche sind vorteilhafte Weiterbildungen der vorliegenden Erfindung.

Bei dem erfindungsgemäßen Verfahren zum Ein- und Auslagern von polaren Lasten erfolgt das Ein- und Auslagern der polaren Last mittels eines Lagersystems und die Orientierung der polaren Last ist zum Zeitpunkt der Einlagerung mit der Orientierung der polaren Last zum Zeitpunkt der Auslagerung im wesentlichen identisch und eine Integration der polaren Last in einen Transportprozeß erfolgt unmittelbar und ohne Orientierungsänderung.

Vorteilhafterweise ist die polare Last ein zu fertigendes Automobil vorzugsweise eine Automobilkarosserie.

Vorteilhafterweise fällt bei dem erfindungsgemäßen Verfahren ein Rotieren der polaren Last weg, so daß ein wartungsbedürftiges und kostenintensives Transportelement eingespart wird. Der Wegfall der Rotation ist weiterhin von Vorteil, da ein zeitintensiver Verfahrensschritt entfällt und so entsprechende Verfahrzeiten eingespart werden können.

Zweckmäßigerweise wird für das erfindungsgemäße Verfahren ein Lagersystem verwendet, welches erlaubt, die polare Last auf einem an Seilen hängenden Lastaufnahmemittel zu transportieren. Zweckmäßigerweise hängt das an Seilen befestigte Lastaufnahmemittel an einer krankatzenartigen Verfahreinheit, die in den Regalgassen verschiebbar gelagert ist

Bei dem erfindungsgemäßen System zum Zwischenlagern von polaren Lasten und zur Integration von polaren Lasten in einen Transportprozeß ist ein Lagersystem vorgesehen, das so ausgebildet ist, die polare Last in einer bestimmten Orientierung einzulagern und nach einem bestimmten Zeitraum auszulagern, wobei die Orientierung der polaren Last während des Auslagerns und während der Integration in den Transportprozeß im wesentlichen unverändert bleibt, wobei ferner das System eine Transportvorrichtung vorsieht, die dazu geeignet ist, die polare Last zu integrieren, wobei zumindest zu Beginn der Integration der polaren Last in den Transportprozeß die Orientierung der polaren Last gegenüber der Orientierung der polaren Last während des Einlagerns im wesentlichen unverändert ist.

Vorteilhafterweise umfaßt das Zwischenlager eine Vielzahl von Regaleinheiten, vorzugsweise Hochregalen, die durch äquidistante Gassen voneinander getrennt sind und in den äquidistanten Gassen krankatzenartige Verfahreinrichtungen vorgesehen sind unter denen, an Seilen hängend, Lastaufnahmemittel angeordnet sind auf denen die polaren Lasten bewegt werden.

Vorteilhafterweise ist es mit dem erfindungsgemäßen System möglich, eine Integration der polaren Lasten in unterschiedlichen Transportprozesse vorzunehmen, da das Lagersystem nicht am Boden der Lagerhalle angeordnet ist, so daß die Bodenfreiheit unterhalb des Lagersystems zur Anordnung der Fertigungs- und Transportstraße genutzt werden kann.

Das erfindungsgemäße Verfahren und System wird am Beispiel einer bevorzugten Ausführungsvariante anhand von Zeichnungen näher erläutert:

Es zeigen
- Figur 1: eine Draufsicht auf einen Zwischenspeicher des Standes der Technik;
- Figur 2: eine Draufsicht auf ein erfindungsgemäßes System zum Zwischenlagern von polaren Lasten sowie eine Transportvorrichtung;
- Figur 3: eine seitliche Ansicht eines erfindungsgemäßen Systems gemäß Figur 2;
- Figur 4: eine Detailansicht einer Automobilkarosserie auf einem Lastaufnahmemittel des erfindungsgemäßen Lagersystems.

Figur 1 zeigt ein Lagersystem des Standes der Technik mit Regaleinheiten S2, die durch Gassen S6 voneinander abgetrennt sind und in die polaren Lasten S5 in einer entsprechenden Orientierung eingelagert werden. Mit einem nicht dargestellten Regalbediensystem werden die polaren Lasten S5, hier Automobilkarosserien in die jeweiligen Regale S2 eingelagert und entsprechend der Bedarfsituation ausgelagert, um die polare Last S5 in einen Transportvorrichtung S4 zu integrieren. Herkömmlicherweise wird die polare Last S5 durch die Gasse S6 bis zu einem Auslagerbereich S7 transportiert und dort auf eine mit Rotationseinrichtung versehene Transportvorrichtung S4 plaziert, die den sogenannten Auslagerstich vomimmt. Nach Übergabe der polaren Last S5 im Auslagerbereich S7 auf eine Transportvorrichtung S4 schwenkt diese zurück in den Transportprozeß und nimmt ggf. eine Rotation der polaren Last S5 vor, so daß diese entsprechend einer bestimmten Orientierung in den Transportprozeß vollständig integriert ist.

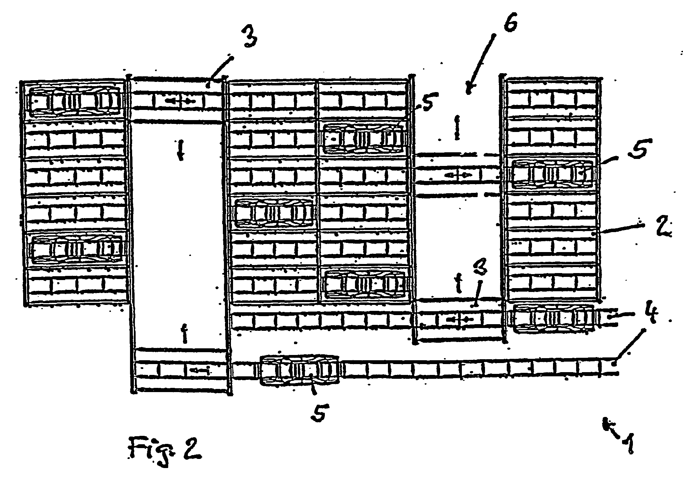

Bei dem erfindungsgemäßen System gemäß Figur 2 wird auf derselben Fläche wie im Stand der Technik gemäß Figur 1 eine größere Anzahl von Regaleinheiten 2 angeordnet und durch die Möglichkeit der Längseinlagerung der polaren Lasten 5 erreicht, daß lediglich zwei Gassen 6 vorzusehen sind und nicht, und wie im Stand der Technik gemäß Figur 1, vier Gassen S6 benötigt werden. Beim Einlagern der polaren Last 5 wird diese beispielsweise auf einer Transportvorrichtung 4 ohne Orientierungsänderung in den Aktionsbereich eines Lastaufnahmemittels 3 gebracht, entsprechend aufgenommen und ohne Orientierungsänderung in einer Regaleinheit 2 eingelagert.

Bei Bedarf wird eine polare Last 5 ohne Orientierungsänderung aus der Regaleinheit 2 entnommen und auf dem Lastaufnahmemittel 3 zu einer Transportvorrichtung 4 befördert und dort in den Transportprozeß integriert, wobei keine Orientietuagsänderung der polaren Last 5 erfolgt.

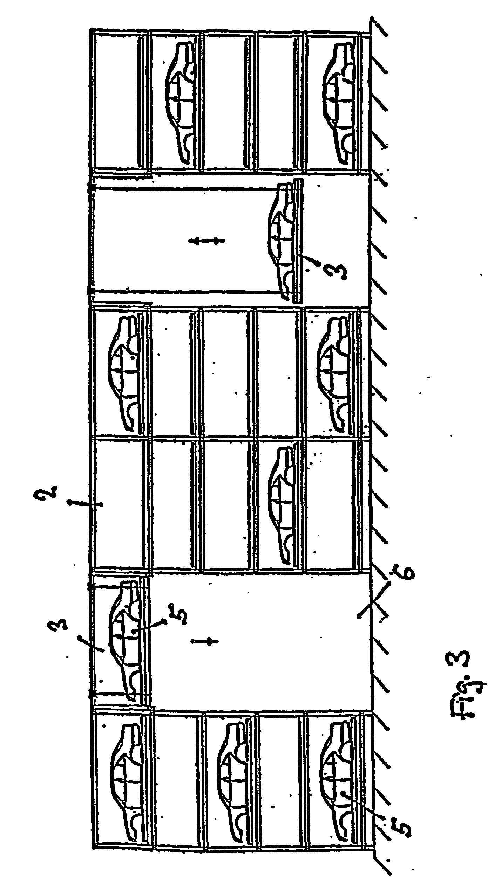

Wie in Figur 3 dargestellt, ist das Lastaufnahmemittel 3 so angeordnet, daß alle Regaleinheiten 2 einer Gasse 6 bedient werden können, da die krankatzenatrige Verfahreinrichtung des Lastaufnahmemittels 3 im obersten Bereich der Regaleinheit 2 angeordnet ist

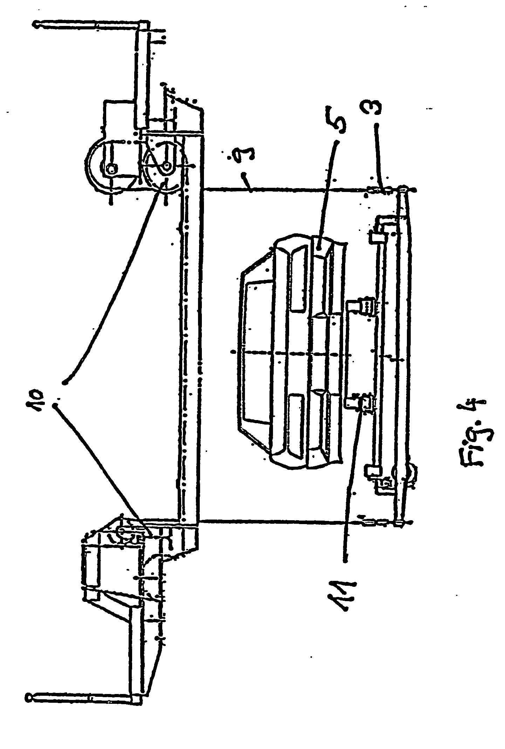

In der schematischen Darstellung gemäß Figur 4 wird die polare Last 5 auf einer nicht näher zu bezeichnenden Vorrichtung 11 befestigt, die fest mit dem Lastaufnahmemittel 3 verbunden ist Das Lastaufnahmemittel 3 ist mittels Seile 9 an einer krankatzenartigen Verfahreinheit 10 hängend befestigt. Zweckmäßigweise sind an der krankatzenartigen Verfahreinheit 10 Einrichtungen vorgesehen, die für den Antrieb und die Steuerung des Lastaufnahmemittels 3 in den Gassen 6, für die Verankerung des Lastaufnahmemittels 3 in den jeweiligen Regaleinheiten 2 sowie für das Senken und Heben des Lastaufnahmemittels 3 verantwortlich sind.

Bei einer besonders bevorzugtren Ausfühtungsform der vorliegenden Erfindung sind mehrere Transporteinrichtungen 4 nebeneinander angeordnet, da während des Transports der polaren Lasten stets Bodenfreiheit besteht und die polaren Lasten somit oberhalb bestehender Einrichtungen der Fertigungs- oder Transportstraße bewegt werden.

## Patentansprüche

1. Verfahren zum Ein- und Auslagern von für einen Fertigungsprozeß bestimmten polaren Lasten (5), wobei das Ein- und Auslagern der polaren Last mittels eines Lagersystems (2, 3, 10) erfolgt, das aus einer Vielzahl von durch Gassen von einander abgetrennten Regaleinheiten und einem an Seilen hängend befestigten Lastaufnahmemittel zum Transport der polaren Lasten (5) besteht und die Orientierung der polaren Last (5) zum Zeitpunkt der Einlagerung mit der Orientierung der polaren Last (5) zum Zeitpunkt der Auslagerung im wesentlichen identisch ist und eine Integration der polaren Last (5) unmittelbar in einen den Fertigungsprozeß vorgeschalteten Transportprozeß ohne Orientierungsänderung erfolgt.

2. Verfahren nach der Anspruch 1, wobei die polare Last (5) ein zu fertigendes Automobil, vorzugsweise eine Karosserie ist.

3. System zum Zwischenlagern von für einen Fertigungsprozeß bestimmten polaren Lasten (5) und Integration von polaren Lasten (5) in einen Transportprozeß bestehend aus einem Lagersystem (2, 3, 10), das aus einer Vielzahl von durch Gassen von einander abgetrennten Regaleinheiten und einem an Seilen hängend befestigten Lastaufnahmemittel zum Transport der polaren Lasten (5) besteht und so ausgebildet ist, die polare Last (5) in einer bestimmten Orientierung einzulagern und nach einem bestimmten Zeitraum auszulagern, wobei die Orientierung der polaren Last (5) während des Auslagerns und während des Integrierens in den den Fertigungsprozeß bestimmten Transportprozeß im wesentlichen unverändert bleibt, ferner bestehend aus einer Transportvorrichtung (4), die dazu geeignet ist, die polare Last (5) zu integrieren, wobei zumindest zu Beginn der Integration der polaren Last (5) in den Transportprozeß die Orientierung der polaren Last (5) gegenüber der Orientierung der polaren Last (5) während des Einlagerns im wesentlichen unverändert ist.

4. System nach Anspruch 3, wobei das Lagersystem (2, 3, 10) eine Vielzahl von Hochregalen umfaßt.

5. System nach Anspruch 3, wobei der Transportprozeß von einer Transportvorrichtung (4), vorzugsweise einem Transportband verwirklicht wird.

6. System nach einem der Ansprüche 3 bis 5, wobei kein Mittel zum Rotieren der polaren Last (5) vorgesehen ist.

## Claims

1. A method for storing and transferring polar loads (5) for a manufacturing process, wherein the storing and transferring of the polar load is performed by means of a storage system (2, 3, 10), comprising a plurality of shelves divided by pathways and loadcarrying means for transporting being pendulously attached to ropes and wherein the orientation of the polar load (5) when being stored is substantially identical to the orientation of the polar load (5) when being transferred, and wherein an integration of the polar load (5) in a transport process is performed directly without a change in orientation.

2. The method according to claim 1, wherein the polar load (5) is an automobile to be manufactured, preferably a car body.

3. A system for temporarily storing polar loads (5) for a manufacturing process and integrating polar loads (5) in a transport process, consisting of a storage system (2, 3, 10) comprising a plurality of shelves divided by pathways and loadcarrying means for transporting being pendulously attached to ropes that is designed so as to store the polar load (5) in a specific orientation and to transfer it after a particular period of time, wherein the orientation of the polar load (5) remains substantially unchanged during transfer and during integration in the transport process for the manufacturing process, and further consisting of a transport device (4) that is suited to integrate the polar load (5), wherein at least at the beginning of the integration of the polar load (5) in the transport process the orientation of the polar load (5) vis-à-vis the orientation of the polar load (5) during storing is substantially unchanged.

4. The system according to claim 3, wherein the storage system (2, 3, 10) comprises a multiplicity of high racks.

5. The system according to claim 3, wherein the transport process is performed by a transport device (4), preferably a conveyor belt.

6. The system according to any of claims 3 to 5, wherein no means for rotating the polar load (5) is provided.

## Revendications

1. Procédé pour stocker et déstocker des charges (5) polaires destinées à un processus de fabrication, dans lequel le stockage et le déstockage de la charge polaire s'effectuent au moyen d'un système de stockage (2, 3, 10) qui est constitué d'une pluralité d'étagères séparées les unes des autres par des ruelles et d'un moyen de réception de charge fixé et accroché sur des câbles pour le transport des charges (5) polaires et l'orientation de la charge (5) polaire au moment du stockage est sensiblement identique à l'orientation de la charge (5) polaire au moment du déstockage et une intégration de la charge (5) polaire intervient directement dans un processus de transport situé en amont du processus de fabrication sans modification d'orientation.

2. Procédé selon la revendication 1, dans lequel la charge (5) polaire est une automobile à fabriquer, de préférence une carrosserie.

3. Système pour l'entreposage de charges (5) polaires destinées à un processus de fabrication et l'intégration de charges (5) polaires dans un processus de transport comprenant un système de stockage (2, 3, 10) qui se compose d'une pluralité d'étagères séparées les unes des autres par des ruelles et d'un moyen de réception de charge fixé et accroché sur des câbles pour le transport des charges (5) polaires et est conçu de manière à stocker la charge (5) polaire dans une orientation définie et à la déstocker après un laps de temps défini, dans lequel l'orientation de la charge (5) polaire reste sensiblement sans changement pendant le déstockage et pendant l'intégration dans le processus de transport destiné au processus de fabrication, comprenant en outre un dispositif de transport (4) qui est apte à intégrer la charge (5) polaire, l'orientation de la charge (5) polaire étant sensiblement inchangée par rapport à l'orientation de la charge (5) polaire pendant le stockage au moins au début de l'intégration de la charge polaire (5) dans le processus de transport.

4. Système selon la revendication 3, dans lequel le système de stockage (2, 3, 10) comprend une pluralité de rayonnages.

5. Système selon la revendication 3, dans lequel le processus de transport est réalisé par un dispositif de transport (4), de préférence une bande transporteuse.

6. Système selon l'une quelconque des revendications 3 à 5, dans lequel aucun moyen n'est prévu pour la rotation de la charge (5) polaire.
